# EUROPEAN PATENT SPECIFICATION

(11) **EP 3 548 324 B1**
(45) Date of publication and mention of the grant of the patent: **11.08.2021**
(21) Application number: 17808884.5
(22) Date of filing: 01.12.2017
(51) Int. Cl.: B60K 11/04, B60K 11/06, F01P 5/06

(54) **COOLING SYSTEM FOR ENGINES**
KÜHLSYSTEM FÜR MOTOREN
SYSTÈME DE REFROIDISSEMENT POUR MOTEURS

(30) Priority: 02.12.2016 IT 201600122659
(43) Date of publication of application: 09.10.2019
(73) Proprietor: PIAGGIO & C. S.p.A., 56025 Pontedera (Pisa) (IT)
(72) Inventor: FRESCHI, Giacomo, 56025 Pontedera (PI) (IT); PAOLO NESTI, 56025 Pontedera (PI) (IT); MATTEO PUCCIONI, 56025 Pontedera (PI) (IT)
(74) Representative: Mannucci, Michele
(86) International application number: PCT/EP2017/081231
(87) International publication number: WO 2018/100182

(56) References cited:
- EP-A2- 0 376 352
- FR-A3- 2 933 042
- JP-A- 2012 207 574
- JP-A- 2013 060 845
- JP-A- 2015 183 664

## Description

The present invention relates to a cooling system of an engine, e.g. an air-cooled engine, for example of a scooter, wherein a cooling fan is controlled by a shaft, put in rotation by the crankshaft or by the crankshaft itself, and it directs an air flow to touch an engine block through a duct.

The axis of the internal combustion engine generally is transversal with respect to the longitudinal development of the motorcycle and then it is horizontal with respect to a ground plane, as well as perpendicular to a vertical plane which is substantially defined by the rotation plane of the fixed, i.e. not steering, rear wheel, when the motorcycle moves forward according to a straight line.

Conveniently, the fan which provides for cooling the engine can be directly keyed to an end of the crankshaft which drags it in rotation, or to another axle adjacent and parallel to the crankshaft, actuated in rotation thereby.

The positioning of the protection guard, therethrough the air flow is drawn, makes that it is not hit by the air flow frontally, but tangentially. The air required for cooling is then drawn by the fan the axis thereof is substantially perpendicular to the air flow deriving from the forward motion of the motorcycle.

In the known examples, wherein the fan is not actuated independently from the rotation of the crankshaft, for example by means of a service electric motor, the rotation regime of the fan does not depend directly upon cooling needs, but it is determined by the rotation regime of the engine.

However, it is apparent that the engine could have cooling needs which do not depend upon the rotation regime of the crankshaft, for example in a starting phase, or with a particularly cold climate.

Nevertheless, this involves that the fan does not stop rotating: it continues to drawn air with a certain head depending upon the rotation regime of the crankshaft and this slows down the rise in temperature in the engine, which then hardly starts the regime operation.

This involves a not correct operation of the engine, a higher energy consumption due to higher inertia and due to the operation of the oil pump which works on a less fluid liquid.

Such cooling systems of an air-cooled internal combustion engine, wherein a cooling fan is controlled by a shaft put into rotation by a crankshaft or by the crankshaft itself are known from JP2015183664A and FR2933042A3.

The technical problem underlying the present invention is to provide a cooling system for engines allowing to obviate the drawbacks mentioned with reference to the known art. Such problem is solved by a cooling system as specified in the appended claims.

In a preferred solution, the fluid inside the engine is the lubricating oil circulating in the engine block, and the activation means includes a thermoexpansible material which increases its own volumetry when the temperature increases and directly acts on the partition by rotating it. In particular, this material preferably can be a wax and the activation then takes place by means of a wax actuator.

Said wax actuator can be placed at a direct contact with the portion of the engine block to be cooled down. As shown in the appended drawings, said wax actuator is placed directly on the finned wall of the cylinder block wherein the piston slides.

The main advantage of the cooling system according to the present invention lies in the fact of preventing the unwished cooling down of the engine when it is still cool, with a wholly mechanical solution which does not alter the structure of the fan and of the engine. This solution further allows a faster response time of the cooling system, since the actuation means is directly linked to the temperature of the engine portin to be cooled.

Moreover, since the partition is directly placed within the duct downstream to the fan, the partition is protected by accidental shocks, which could hinder the operation thereof, and by the damages derivable from an excessive heating of the engine block.

The present invention will be described hereinafter according to a preferred embodiment thereof, provided by way of example and not for limitative purposes with reference to the enclosed drawings wherein:
* figures 1A and 1B show partial views of respective longitudinal sections of an air-cooled engine and of the fan thereof, incorporating a cooling system according to the invention;
* figures 2A and 2B show partial views of respective longitudinal sections of an air-cooled engine and of the fan thereof, illustrating the operation of the cooling system of figures 1A and 1B;

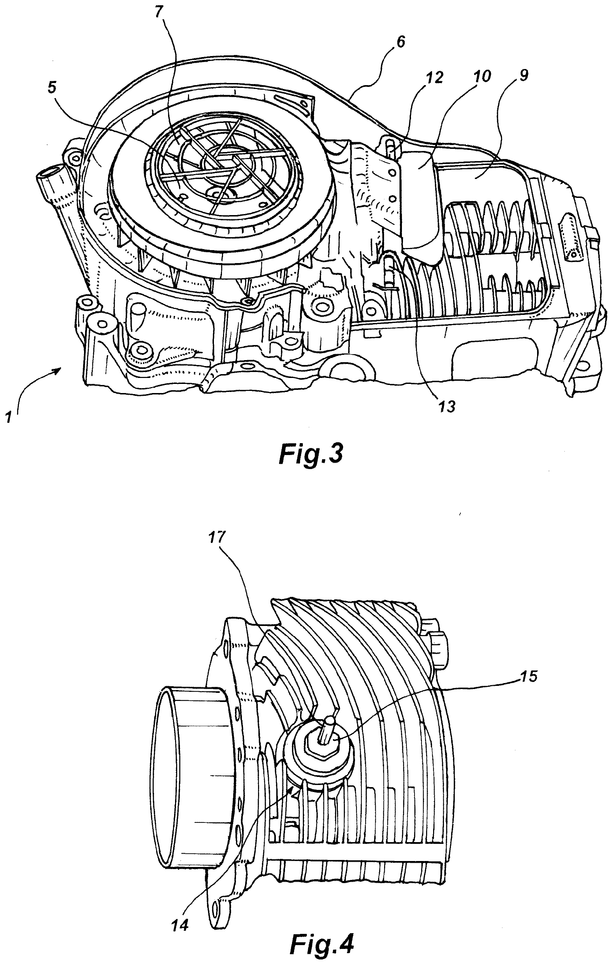

* figure 3 shows a perspective top view of the cooling system of the previous figures, in partial section; and
* figure 4 shows a perspective view of a detail of the system of figure 3.

By referring to figures, a propulsion unit 1 is partially represented. It comprises an air-cooled single-cylinder internal combustion engine, the engine block thereof is represented wherein the cylinder is formed, with a finned outer surface.

The propulsion unit 1 even comprises a crankshaft 2 which transmits the motion to not represented transmission elements. The crankshaft 2 extends in opposite direction with respect to the transmission elements, and it is connected to an electric motor 3 comprising respective stator windings 4.

It is to be noted that the crankshaft 2 is transversal with respect to the longitudinal development of the motorcycle and then it is horizontal with respect to a ground plane, as well perpendicular to a vertical plane which is substantially defined by the rotation plane of the fixed, i.e. not steering, rear wheel, when the motorcycle moves forward according to straight line.

The motor 3 can be a simple current generator which provides for supplying electric energy to the combustion engine and to possible services and/or for feeding a battery.

In the present example, the propulsion unit 1 comprises a cooling system having a cooling fan 5 keyed directly on the crankshaft 2 which then acts as shaft for actuating the fan.

It is to be meant that the fan could be keyed on a different driving shaft with respect to the crankshaft, in case dragged thereby to offset the fan with respect to the crankshaft.

The fan 5 is included in a casing 6 which has an intake aperture 7 in case equipped with a protective guard. The fan 5 is keyed on an end of the crankshaft 2 by means of a simple fixed connection. It then rotates continuously at the regime of the crankshaft 2, and it directs a cooling air flow through a duct 8 formed by an extension 9 of the casing 6, so that the air flow touches the finned surface of the engine block by cooling it down. The duct 8 extends downstream, according to the discharge direction of the air flow from the fan 5.

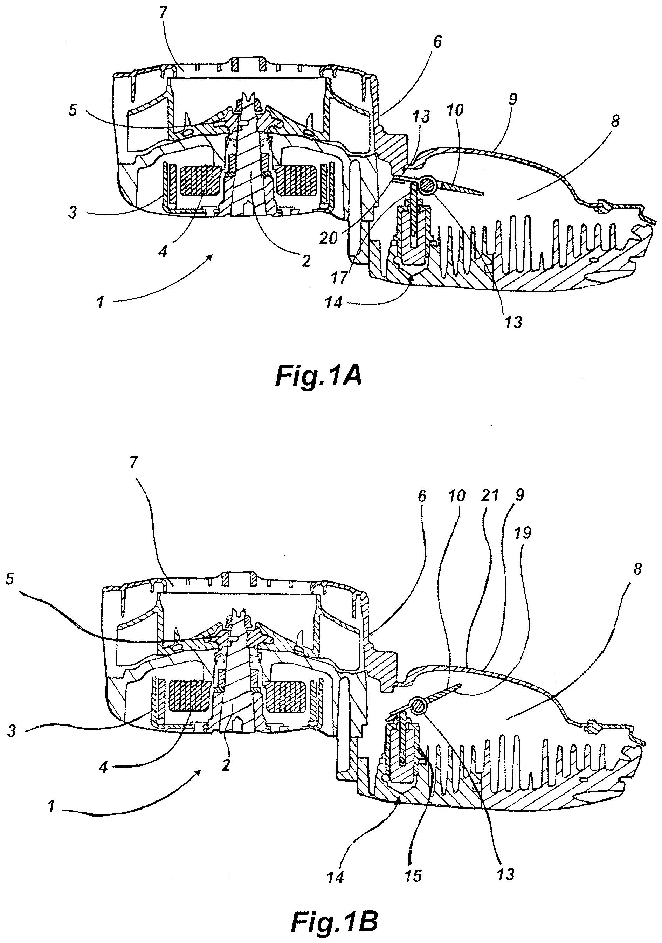

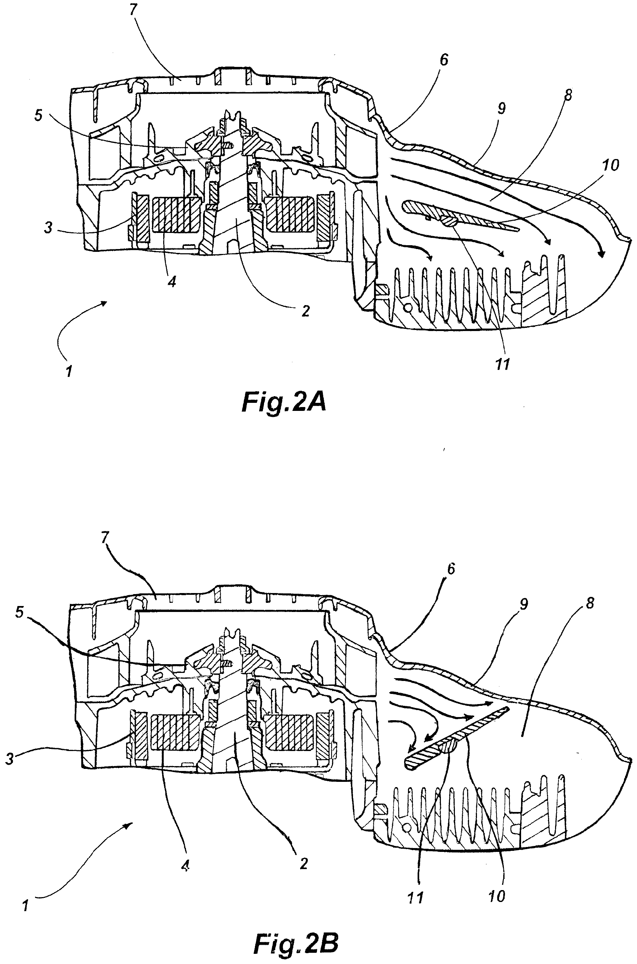

A partition 10 is revolvingly fastened near the fan 5, inside the duct 8, to an axis 11 acting as fulcrum. At the ends of the axis 11, respective preloaded springs are provided: a first preloaded spring 12 which tends to keep the partition 10 in a starting configuration wherein it obstructs the duct 8 (figures 1B and 2B); and a second preloaded spring 13 which tends to keep the partition 10 in a second configuration at regime wherein the duct 8 is free (figures 1A and 2A).

Both springs are of helical type, wound around the axis 11 of the partition 10, and they transmit opposed twisting forces on the partition 10. The force exerted by the first spring 12 on the partition 10 is higher than the one exerted by the second spring 13.

The herein described cooling system comprises means for activating the partition 10, which is sensible to the temperature of a fluid circulating in the propulsion unit 1.

In this example, the fluid is the lubricating oil circulating in the engine block, forced in circulation by the oil pump of unit 1.

The oil then touches the above-mentioned activation means which, in the present case, is constituted by a wax actuator 14 having inside a tank 15 full of thermoexpansible material, preferably a wax.

The expansion of this material determines the translation of a control rod 17 which directly presses, without the interposition of mechanical members or rods, on the partition 10 by accompanying the opening thereof. The partition 10, through the opening, is displaced substantially parallel to the disharge direction of the air flow, in opposition to the twisting force of the first spring 12 (figure 1A), that is overcoming the difference in the forces exerted by the first spring 12 with respect to the second spring 13.

The partition 10 comprises a proximal edge 18, near the axis 11, and a farer distal edge 19.

In the starting configuration, the distal edge 19 of the partition 10 rests upon a second abutting element 21, the partition 10 then is raised by obstructing the air duct 8 (figure 1B).

By increasing the temperature, the rod 17 extends by rotating the second spring 13 and the partition 10 towards said regime configuration. As the oil temperature increases, the partition rotates gradually, due to the effect of the combined force of the two springs 12 and 13 and of the pressure exerted by the rod 17, as far as the proximal edge 18 is resting upon a first abutting element 20, pushed by the first spring 12. The first abutment element prevents the partition 10 from rotating excessively.

When the rod 17 continues to extend, it acts only on the second spring 13. In this way, the position of the partition 10, related to a given temperature, is always the same.

In this way, an adjustment of the air flow is obtained which is partialised when the engine is not yet at its maximum temperature.

When the operation of the propulsion unit 1 stops, the engine block cools down and the partition returns to its starting position, that is to the first configuration.

It is meant however that the activation means can assume other shapes, for example be based upon thermoexpansible stiff elements.

To the above-described cooling system a person skilled in the art, with the purpose of satisfying additional and contingent needs, could introduce several additional modifications and variants, however all comprised within the protective scope of the present invention, as defined by the enclosed claims.

## Claims

1. A cooling system of an air-cooled internal combustion engine (1), wherein a cooling fan (5) is controlled by a shaft put in rotation by the crankshaft (2) or by the crankshaft itself (2), and it directs an air flow to touch an engine block through a duct (8), wherein a partition (10) is provided which can be moved between a first starting configuration, wherein it obstructs the duct, and a second regime configuration, wherein the duct (8) is free, said partition being activated by activation means sensible to the temperature of a fluid inside the engine; and the cooling system being **characterized in that** the partition (10) is placed within the duct (8), downstream with respect to the fan (5).

2. The cooling system according to claim 1, wherein the activation means directly operates the partition (10) opening, without the interposition of any mechanical members.

3. The cooling system according to claim 1 or 2, wherein the actuation shaft coincides with the crankshaft (2) of the engine to be cooled down.

4. The cooling system according to any of the preceding claims, wherein the fan (5) is included in a casing (6) and the duct (8) is formed by an extension (9) of the casing (6).

5. The cooling system according to any of the preceding claims, wherein the partition (10) is revolvingly fastened near the fan (5) to an axis (11) acting as fulcrum.

6. The cooling system according to claim 5, wherein at the ends of the axis (11) respective preloaded springs are provided: a first preloaded spring (12) which tends to keep the partition (10) in the starting configuration wherein it obstructs the duct (8); and a preloaded second spring (13) which tends to keep the partition (10) in the regime configuration wherein the duct (8) is free, the force exerted by the first spring (12) on the partition (10) being higher than the one exerted by the second spring (13).

7. The cooling system according to any of the preceding claims, wherein the activation means of the partition (10), is sensitive to the temperature of the lubricating oil circulating in the engine block.

8. The cooling system according to any of the preceding claims, wherein the activation means is constituted by a wax actuator (14) having inside a tank (15) full of thermoexpansible material, preferably a wax, the expansion of this material determining the translation of a control rod (17).

9. The cooling system according to claim 8, wherein the tank (15) of the wax actuator (14) is in direct contact with the portion of the engine block to be cooled down, preferably with the external surface of the cylinder block.

10. The cooling system according to claims 6 and 8, wherein the control rod (17) presses on said second spring (13), by accompanying it in opening the partition (10) in opposition to the twisting force of the first spring (12).

11. The cooling system according to claim 9, wherein the partition (10) comprises a proximal ending edge (18), near the axis (11), and a farer distal ending edge (19), so that, in said regime configuration, the proximal edge (18) is resting upon a first abutting element (20), pushed by the second spring (13) so that, if the rod (17) continues to extend, it acts only on the second spring (13), and that, in said starting configuration, the distal edge (19) of the partition (10) rests upon a second abutting element (21) due to the effect of the first spring (12).

12. A scooter comprising a cooling system according to one of the preceding claims.

## Patentansprüche

1. Kühlsystem für eine luftgekühlte Verbrennungsmaschine (1), wobei ein Kühlgebläse (5) durch eine Welle gesteuert wird, die durch die Kurbelwelle (2) oder durch die Kurbelwelle selbst (2) in Drehung versetzt wird und einen Luftstrom richtet, um einen Motorblock durch eine Leitung (8) zu berühren, wobei eine Abtrennung (10) vorgesehen ist, die zwischen einer ersten Startkonfiguration, in der sie die Leitung versperrt, und einer zweiten Regimekonfiguration bewegbar ist, in der die Leitung (8) frei ist, wobei die Abtrennung durch eine Aktivierungseinrichtung aktiviert wird, die für die Temperatur eines Fluids innerhalb des Motors empfindlich ist, und wobei das Kühlsystem **dadurch gekennzeichnet ist, dass** die Abtrennung (10) innerhalb der Leitung (8) stromab mit Bezug auf das Gebläse (5) angeordnet ist.

2. Kühlsystem nach Anspruch 1, wobei die Aktivierungseinrichtung direkt das Öffnen der Abtrennung (10) ohne Zwischenfügung irgendeines mechanischen Elementes betreibt.

3. Kühlsystem nach Anspruch 1 oder 2, wobei die Betätigungswelle mit der Kurbelwelle (2) des Motors, der abzukühlen ist, zusammentrifft.

4. Kühlsystem nach einem der vorstehenden Ansprüche, wobei das Gebläse (5) in einem Gehäuse (6) aufgenommen ist und die Leitung (8) durch einen Fortsatz (9) des Gehäuses (6) gebildet ist.

5. Kühlsystem nach einem der vorstehenden Ansprüche, wobei die Abtrennung (10) drehbar in der Nähe des Gebläses (5) an einer Achse (11) befestigt ist, die als Drehpunkt dient.

6. Kühlsystem nach Anspruch 5, wobei an den Enden der Achse (11) jeweilige vorbelastet Federn vorgesehen sind: eine erste vorbelastete Feder (12), die dazu neigt, die Abtrennung (11) in der Startkonfiguration zu halten, in der sie die Leitung (8) abgesperrt, und eine vorbelastete zweite Feder (13), die dazu neigt, die Abtrennung (10) in der Regimekonfiguration zu halten, in der die Leitung (8) frei ist, wobei die Kraft, die durch die erste Feder (12) auf die Abtrennung (10) ausgeübt wird, größer ist als die, die durch die zweite Feder (13) ausgeübt wird.

7. Kühlsystem nach einem der vorstehenden Ansprüche, wobei die Aktivierungseinrichtung der Abtrennung (10) empfindlich für die Temperatur des Schmieröls ist, das in dem Motorblock zirkuliert.

8. Kühlsystem nach einem der vorstehenden Ansprüche, wobei die Aktivierungseinrichtung durch einen Wachs-Aktuator (14) gebildet ist, der innerhalb einen Tank (15) aufweist, der voll mit thermisch expandierendem Material ist, vorzugsweise einem Wachs, wobei die Expansion dieses Materials die Bewegung eines Steuerstabs bestimmt.

9. Kühlsystem nach Anspruch 8, wobei der Tank (15) des Wachs-Aktuators (14) in direktem Kontakt mit dem Teil des Motorblocks, der abzukühlen ist, steht, vorzugsweise mit der Außenfläche des Zylinderblocks.

10. Kühlsystem nach Anspruch 6 und 8, wobei der Steuerstab (17) auf die zweite Feder (13) drückt um sie beim Öffnen der Abtrennung (10) gegen die Zwangskraft der ersten Feder (12) zu unterstützen.

11. Kühlsystem nach Anspruch 9, wobei die Abtrennung (10) eine proximale Endkante (18) in der Nähe der Achse (11) und eine entferntere distale Endkante (19) aufweist, sodass in der Regimekonfiguration die proximale Kante (18) auf einem ersten Anschlagelement (20) lagert, geschoben durch die zweite Feder (13), sodass, falls der Stab (17) sich weiterhin erstreckt, er nur auf die zweite Feder (13) wirkt, und dass, in der Startkonfiguration, die distale Kante (19) der Abtrennung (10) auf einem zweiten Anschlagelement (21 aufgrund des Effekts der ersten Feder (12) lagert.

12. Motorroller mit einem Kühlsystem nach einem der vorstehenden Ansprüche.

## Revendications

1. Un système de refroidissement d'un moteur à combustion interne refroidi à l'air (1), dans lequel un ventilateur de refroidissement (5) est commandé par un arbre entraîné en rotation par le vilebrequin (2) ou par le vilebrequin lui-même (2), et il dirige un flux d'air pour qu'il entre en contact avec un bloc moteur à travers un conduit (8), dans lequel il est prévu une cloison (10) qui peut être déplacée entre une première configuration de départ, dans laquelle elle obstrue le conduit, et une deuxième configuration de régime, dans laquelle le conduit (8) est libre, ladite cloison étant activée par un moyen d'activation sensible à la température d'un fluide à l'intérieur du moteur ; et le système de refroidissement étant **caractérisé en ce que** la cloison (10) est placée à l'intérieur du conduit (8), en aval du ventilateur (5).

2. Le système de refroidissement selon la revendication 1, dans lequel le moyen d'activation actionne directement l'ouverture de la cloison (10), sans l'intervention d'organes mécaniques.

3. Le système de refroidissement selon la revendication 1 ou 2, dans lequel l'arbre d'actionnement coïncide avec le vilebrequin (2) du moteur à refroidir.

4. Le système de refroidissement selon l'une quelconque des revendications précédentes, dans lequel le ventilateur (5) est inclus dans un boîtier (6) et le conduit (8) est formé par une extension (9) du boîtier (6).

5. Le système de refroidissement selon l'une quelconque des revendications précédentes, dans lequel la cloison (10) est montée pivotante près du ventilateur (5) sur un axe (11) agissant comme pivot.

6. Le système de refroidissement selon la revendication 5, dans lequel, aux extrémités de l'axe (11), des ressorts précontraints respectifs sont prévus : un premier ressort précontraint (12) qui tend à maintenir la cloison (10) dans la configuration de départ dans laquelle elle obstrue le conduit (8) ; et un deuxième ressort précontraint (13) qui tend à maintenir la cloison (10) dans la configuration de régime dans laquelle le conduit (8) est libre, la force exercée par le premier ressort (12) sur la cloison (10) étant supérieure à celle exercée par le deuxième ressort (13).

7. Le système de refroidissement selon l'une quelconque des revendications précédentes, dans lequel le moyen d'activation de la cloison (10) est sensible à la température de l'huile de lubrification circulant dans le bloc moteur.

8. Le système de refroidissement selon l'une quelconque des revendications précédentes, dans lequel le moyen d'activation est constitué d'un actuateur à cire (14) ayant en son sein un réservoir (15) plein de matériaux thermo-expansible, de préférence une cire, l'expansion de ce matériau déterminant le déplacement d'une tige de commande (17).

9. Le système de refroidissement selon la revendication 8, dans lequel le réservoir (15) de l'actuateur à cire (14) est en contact direct avec la partie du bloc moteur à refroidir, de préférence avec la surface externe du bloc-cylindre.

10. Le système de refroidissement selon les revendications 6 et 8, dans lequel la tige de commande (17) appuie sur ledit deuxième ressort (13), en l'accompagnant lors de l'ouverture de la cloison (10) en s'opposant à la force de torsion du premier ressort (12).

11. Le système de refroidissement selon la revendication 9, dans lequel la cloison (10) comprend un bord d'extrémité proximal (18), près de l'axe (11), et un bord d'extrémité distal plus éloigné (19), de sorte que, dans ledit régime de croisière, le bord proximal (18) repose sur un premier élément formant butée (20), poussé par le deuxième ressort (13), de sorte que, si la tige (17) continue à s'étendre, elle agit seulement sur le deuxième ressort (13) et que, dans ladite configuration de départ, le bord distal (19) de la cloison (10) repose sur un deuxième élément formant butée (21) en raison de l'effet du premier ressort (12).

12. Un scooter comprenant un système de refroidissement selon l'une des revendications précédentes.
